**Europäisches Patentamt**

**European Patent Office**

**Office européen des brevets**

(19)

(11) Veröffentlichungsnummer: **0 166 892**
**B1**

(12) **EUROPÄISCHE PATENTSCHRIFT**

(45) Veröffentlichungstag der Patentschrift:
**13.07.88**

(51) Int. Cl.⁴: **H 04 L 11/16**, H 04 L 5/16

(21) Anmeldenummer: **85104922.1**

(22) Anmeldetag: **23.04.85**

(54) TDMA-Punkt-zu Mehrpunkt-Kommunikationssystem.

(30) Priorität: **03.07.84 DE 3424369**

(43) Veröffentlichungstag der Anmeldung:
**08.01.86 Patentblatt 86/2**

(45) Bekanntmachung des Hinweises auf die Patenterteilung:
**13.07.88 Patentblatt 88/28**

(84) Benannte Vertragsstaaten:
**AT DE FR GB IT**

(56) Entgegenhaltungen:
**CONFERENCE EUROPEENNE SUR LES
COMMUNICATIONS OPTIQUES, 21.-24. September
1982, Seiten 553-558, Cannes, FR; K. OSHIMA et al.:
"Fibre optic TDMA system for passive local networks"
COMPCON SPRING '82, High technology in the
information industry, 22.-25. Februar 1982, San
Francisco, Seiten 182-186, IEEE, New York, US; I. KONG
et al.: "CableNet: A local area network reservation
scheme"**

(73) Patentinhaber: **ANT Nachrichtentechnik GmbH,
Gerberstrasse 33, D-7150 Backnang (DE)**

(72) Erfinder: **Sperlich, Josef, Dipl.-Ing., Kelterweg 52,
D-7150 Backnang (DE)**

(74) Vertreter: **Wiechmann, Manfred, Dipl.-Ing., ANT
Nachrichtentechnik GmbH
Gerberstrasse 33 Postfach 11 20, D-7150 Backnang (DE)**

ACTORUM AG

## Beschreibung

Die Erfindung betrifft ein Kommunikationssystem gemäss dem Oberbegriff des Patentanspruchs 1. Ein solches Kommunikationssystem ist aus dem Tagungsband der «Conférence Européene sur les Communications Optiques, Cannes, Frankreich 21.–24. September 1982, Seiten 553–558, Oshima et al, insbesondere aus den Abschnitten 2 und 4 bekannt.

Es wird dort ein optisches Übertragungsnetz beschrieben mit einer Zentralstation und einem Lichtquellenleiterringsystem, an welches über optische Koppler Unterstationen angeschlossen sind. Eine Punkt-zu Mehrpunkt-Übertragung nach dem TDMA-Verfahren mit Mehrfachausnutzung des Übertragungsbandes ist möglich. Die Wartezeiten der Unterstationen werden von der Zentralstation vorgegeben. Dazu sendet die Zentralstation einen Referenzburst aus. Jede Unterstation überträgt ihren Datenburst nach einer vorbestimmten Zeit im Anschluss an den Empfang des Referenzbursts. Der Gesamtbetrag der Wartezeit innerhalb eines TDMA-Rahmens kann bei dem dortigen Kommunikationssystem durch günstige Wahl der Reihenfolge der Burstaussendung bezüglich der einzelnen Unterstationen minimal gehalten werden.

Aufgabe der Erfindung ist es, ein Kommunikationssystem gemäss dem Oberbegriff des Patentanspruches 1 so auszubilden, dass häufiges Umschalten der Zentralstation zwischen Sende- und Empfangsbetrieb und der damit verbundenen Wartezeit vermieden wird.

Diese Aufgabe wird durch die Merkmale des Patentanspruches 1 gelöst. Die Ansprüche 2 und 3 zeigen vorteilhafte Ausbildungen des Kommunikationssystems auf. Das Kommunikationssystem nach der Erfindung eignet sich besonders für terrestrische Anwendungen. Bei terrestrischer Übertragung sind die Laufzeiten $t_{n_{max}} = \frac{t_M}{l} l_n$,

mit $\frac{t_M}{l}$ = spezifische Laufzeit des Übertragungsmediums (Kabel, Lichtwellenleiter, Freiraum) und $l_n$ = Abstand der Zentralstation zur jeweiligen Unterstation, im allgemeinen klein im Verhältnis zur Rahmendauer $t_R$, so dass der Rahmenaufbau nach der Erfindung die Mehrfachausnutzung des Übertragungsbandes für Hin-und Rückrichtung problemlos ermöglicht. Es tritt zwischen den Sende- und Empfangszyklen bei der Zentralstation nur eine Pause von $2t_1 + W_1$ auf ($t_1$=Signallaufzeit zwischen Zentralstation und nächstgelegener Unterstation, $W_1$=Wartezeit – Umschaltzeit von Empfangs- auf Sendebetrieb – bei der zur Zentralstation nächstgelegenen Unterstation).

Anhand der Zeichnungen wird die Erfindung nun näher erläutert. Es zeigen

Fig. 1 und Fig. 2 prinzipielle Systemanordnungen,

Fig. 3 den Rahmenaufbau nach der Erfindung und

Fig. 4 eine Systemanordnung unter Verwendung von Lichtwellenleitern.

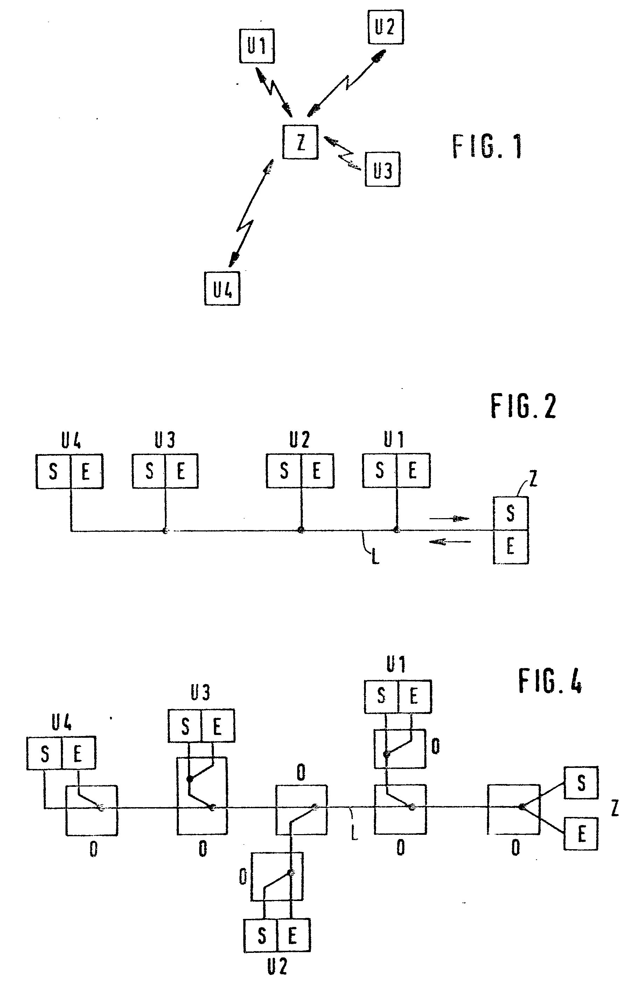

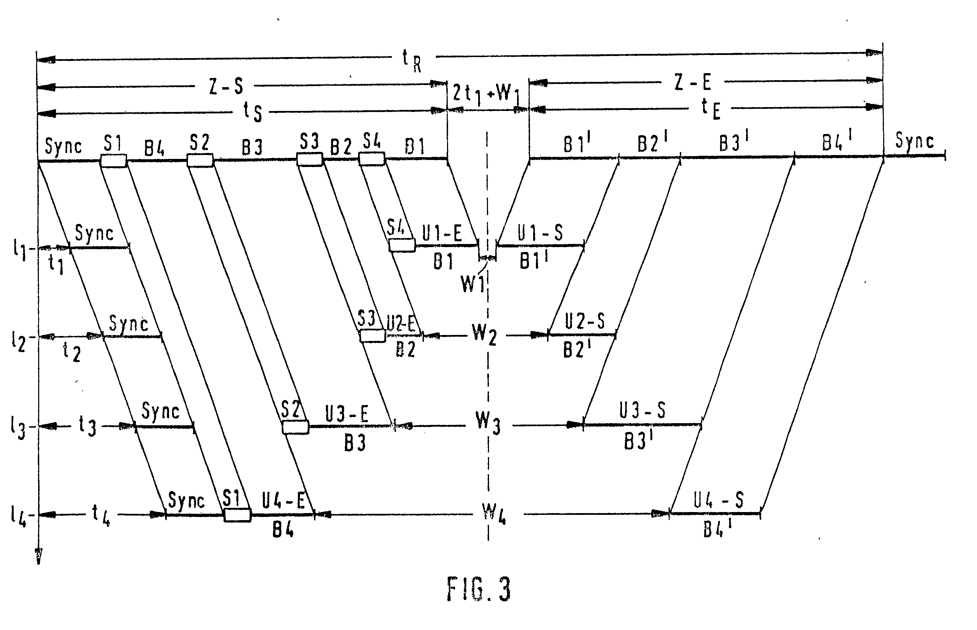

Beim terrestrischen Punkt-zu Mehrpunkt-Kommunikationssystem nach Fig. 1 stehen Unterstationen U1, U2, U3, U4, über eine Zentralstation Z an einer derart exponierten Stelle angeordnet sein, dass sie im Funkbereich sämtlicher Unterstationen liegt. Die Kommunikation erfolgt dabei nach dem TDMA-Verfahren mit einem Rahmenaufbau gemäss Fig. 3.

Die Zentralstation Z sendet die Bursts in folgender Reihenfolge an die Unterstationen U1 bis U4: Nach einem Synchronwort Sync wird der Burst B4 für die von der Zentralstation Z am entferntesten liegende Unterstation U4 ausgesendet. Der Burst B4 wird dabei von einem Synchroncharakter S1 eingeleitet, der die Information über die Wartezeit $W_4$ der Station U4 zwischen ihrer Empfangs- und Sendezeit enthält. Dieser Burst B4 trifft zusammen mit dem Synchronwort Sync bei der Unterstation U4 nach der Laufzeit $t_4$ ein. $l_4$ bezeichnet die Entfernung zwischen der Zentralstation Z und der Unterstation $U_4$. An den Burst B4 schliesst sich nun der Burst B3 für die bezüglich der Zentralstation Z am zweitentferntesten (Entfernung $l_3$) gelegene Unterstation U3 an, wobei dieser Burst B3 wieder durch ein Synchroncharakter S2 eingeleitet wird, welcher die Wartezeit $W_3$ für diese Station bezüglich ihres Sendebeginns enthält. Der Burst B3 trifft nach der Zeit $t_3$ bei der Unterstation U3 ein. Die Aneinanderreihung der Bursts setzt sich fort bis zum Burst B1 für die der Zentralstation Z nächstgelegene Unterstation U1. Der Sendeabschnitt $t_s$ der Zentralstation Z innerhalb des TDMA-Rahmens mit der Dauer $t_R$ ist damit beendet. Nach Eintreffen des Bursts B1 bei der Unterstation U1 beginnt nun diese der Zentralstation Z nächstgelegene Unterstation U1 mit der Aussendung eines Bursts B1' zur Zentralstation Z. Dies geschieht jedoch erst nach Verstreichen der Wartezeit $W_1$. Diese Wartezeit $W_1$ berücksichtigt insbesondere die Umschaltzeit von Empfangs- auf Sendebetrieb bezüglich der Unterstation U1. Die weiteren Unterstationen U2 bis U4 senden ihre Bursts B2' bis B4' nach jeweiligen Wartezeiten $W_2$ bis $W_4$ bezüglich ihrer Empfangsbursts B4 bis B2 und zwar zuerst die der Zentralstation Z nächstgelegenen Unterstationen und zuletzt die von der Zentralstation Z am weitesten entfernt gelegene Unterstation U4. Die unterschiedlichen Wartezeiten $W_1$ bis $W_4$ werden von der Zentralstation Z vorgegeben und den Unterstationen Un entweder, wie in Fig. 3 dargestellt, zu Beginn der jeweiligen Bursts als Synchroncharakter S1 ... S4 stationsindividuell mitgeteilt oder im Synchronwort Sync des von der Zentralstation Z gesendeten Rahmens $t_s$. Diese Wartezeiten $W_1$ bis $W_4$ richten sich nicht nur nach der Laufzeit einer spezifischen Unterstation zur Zentrale, sondern hängen auch von den Burstzeiten der anderen Stationen ab, die von der Zentralstation Z je nach Übertragungsbedarf zu den einzelnen Unterstationen vorgegeben werden. Die Wartezeiten $W_1$ bis $W_4$ werden so gewählt, dass die von den Unterstationen U1 bis U4 ausgesendeten Bursts B1' bis B4' sich beim Empfang durch die Zentralstation Z während deren Empfangszeit $t_E$ nahtlos aneinanderreihen. Zwischen der Sendedauer $t_S$ und der Empfangsdauer $t_E$ der Zentralstation Z tritt im Rahmen $t_R$ eine Übergangszeit von $2t_1+W_1$ auf, wobei $t_1$ durch die Laufzeit des Bursts B1′ von der Zentralstation Z zur nächstgelegenen Unterstation U1 vorgegeben ist und $w_1$, wie bereits erwähnt, insbesondere die Sende-/Empfangs-Umschaltzeit der nächstgelegenen Unterstation U1 kennzeichnet.

Sowohl für die Sendebursts B1 bis B4 von der Zentralstation Z an die Unterstationen U1 bis U4 als auch für die Sendebursts B1′ bis b4′ von den Unterstationen U1 bis U4 an die Zentralstation Z wird das gleiche Funk-Frequenzband benutzt und die Übertragung für beide Richtungen erfolgt im Zeitgetrenntlage-Verfahren.

Beim Kommunikationssystem nach Fig. 2 erfolgt die Übertragung leitergebunden. Für beide Übertragungsrichtungen zwischen den Unterstationen U1 bis U4 und der Zentralstation Z steht nur ein Leiter L zur Verfügung – Liniennetz – mit Übertragungsmöglichkeit in nur einem Frequenzband als Übertragungsband, bzw. bei einem Lichtwellenleiter nur eine Lichtwellenlänge als Übertragungsband. Der Rahmenaufbau für das Ausführungsbeispiel nach Fig. 2 erfolgt ebenfalls wie in Fig. 3 dargestellt.

Bei leitergebundenen Übertragungen eignet sich insbesondere bei Lichtwellenleiterstrecken die Übertragungsart nach der Erfindung, die wegen der geringen Dämpfung des Lichtwellenleiters auch grössere Entfernungen ohne Zwischenverstärker zu überbrücken gestattet und dabei entsprechend sich auswirkende Laufzeiten aufweist.

Wie in Fig. 4 dargestellt, kann die Ein- und Auskopplung der Signale bei der Zentralstation Z wie auch den Unterstationen U1 bis U4 über passive optische Koppler 0 – beispielsweise Schweisskoppler – erfolgen. Die dabei auftretenden Dämpfungen $\approx$ 4,5 dB pro Koppler sind entsprechend im Dämpfungsplan zu berücksichtigen.

Die Bursts B1′ bis B4′ enthalten ebenfalls Synchroncharaktere, z.B. S1′ bis S4′, und ermöglichen dem Empfänger der Zentralstation Z, sich auf die jeweilige Phasenlage des Empfangstaktes des betreffenden Bursts einzustellen.

Im Hinblick auf eine einfache Ausgestaltung einer Laufzeitausverteschaltung in der Zentralstation Z sollte jeder Burst B1′ bis B4′ mit einem «Schlusscharakter» versehen sein, den die Zentralstation Z erkennt und auf den sie das folgende Synchronwort S2′ . . . S4′ zeitlich «heranschiebt». Die «Sync»-Worte folgen im – unveränderten – Rahmenabstand $t_R$.

## Patentansprüche

1. TDMA-Punkt-zu Mehrpunkt-Kommunikationssystem mit einer Zentralstation (Z) und mehreren Unterstationen (U1, U2, . . .), wobei die für die einzelnen Unterstationen unterschiedlichen Wartezeiten ($W_1$, $W_2$; . . . $W_4$) von der Zentralstation (Z) festgelegt und den Unterstationen (U1, U2; . .) mitgeteilt werden, und wobei eine Mehrfachausnutzung des Übertragungsbandes erfolgt, gekennzeichnet durch folgenden Rahmenaufbau:

– die Zentralstation (Z) beginnt mit der Aussendung der Bursts (B1, B2 . . .) für die am weitesten entfernte Untersation (U4) und sendet erst am Schluss jeder Rahmensendezeit den Burst (z.B. B1) für die nächstgelegene Unterstation (U1),

– die Unterstationen (U1, U2 . . .) senden in umgekehrter Richtung, also zuerst die bezüglich der Zentralstation (Z) nächstgelegene und zuletzt die am weitesten entfernte Unterstation und zwar im Anschluss an die Rahmensendezeit ($t_s$) der Zentralstation (Z) unter Berücksichtigung der Umschaltzeit zwischen Sende- und Empfangsbetrieb.

2. Kommunikationssystem nach Anspruch 1, dadurch gekennzeichnet, dass die Informationen über die Wartezeiten ($W_1$, $W_2$ . . . $W_4$) in einem Synchronwort (Sync) des von der Zentralstation (Z) gesendeten Rahmens übertragen werden.

3. Kommunikationssystem nach Anspruch 1, dadurch gekennzeichnet, dass je Burst (B1, B2 . . .) ein Synchroncharakter (S1, S2, S3; . .) übertragen wird, der die Information über die Wartezeiten ($W_1$, $W_2$ . . . $W_4$) enthält.

## Revendications

1. Système de communication AMRT point à multipoint, comprenant une station centrale (Z) et plusieurs sous-stations (U1, U2, . . .), avec fixation par la station centrale (Z) des différents temps d'attente ($W_1$, $W_2$, . . . , $W_4$) pour les sous-stations individuelles (U1, U2, . . .) et communication de ces temps aux sous-stations, et avec exploitation multiple de la bande de transmission, caractérisé par la composition de trame suivante:

– la station centrale (Z) commence par l'émission des rafales ou paquets (B1, B2, . . .) pour la station (U4) la plus éloignée et émet à la fin seulement de chaque temps d'émission de trame le paquet (par exemple B1) pour la sous-station (U1) la plus proche et

– les sous-stations (U1, U2, . . .) émettent en sens inverse, donc, en premier, celle située le plus proche de la station centrale (Z) et en dernier la sous-station la plus éloignée et ce à la suite du temps d'émission de trame ($t_s$) de la station centrale (Z), en tenant compte du temps de commutation pour passer du mode d'émission au mode de réception.

2. Système de communication selon la revendication 1, caractérisé en ce que les informations concernant les temps d'attente ($W_1$, $W_2$, . . . , $W_4$) sont transmises dans un mot de verrouillage (Sync) de la trame émise par la station centrale Z.

3. Système de communication selon la revendication 1, caractérisé par la transmission, pour chaque paquet (B1, B2, . . .), d'un caractère de verrouillage (S1, S2, S3, . . .) qui contient l'information concernant les temps d'attente ($W_1$, $W_2$, . . ., $W_4$)

## Claims

1. A TDMA point-to multipoint communications system including a central station (Z) and a plurality of substations (U1, U2, ...), with the waiting times ($W_1$, $W_2$, ... $W_4$), which are different for the individual substations, being fixed by the central station (Z) and reported to the substations (U1, U2, ...) and with multiple utilization of the transmission band, characterized by the following frame structure:

– the central station (Z) begins transmitting bursts (B1, B2, ...) for the most remote substation (U4) and transmits the burst (e.g. B1) for the closest substation (U1) only at the end of each frame transmitting period;

– the substations (U1, U2, ...) transmit in the reverse direction, i.e. first the substation closest to the central station (Z) and last the most remote substation, this transmission taking place subsequent to the frame transmission period ($t_s$) of the central station (Z) under consideration of the time required to switch between transmit and receive operation.

2. A communications system according to claim 1, characterized in that the informations regarding the waiting times ($W_1$, $W_2$, ..., $W_4$) are transmitted in a synchronizing word (Sync) for the frame transmitted by the central station (Z).

3. A communications system according to claim 1, characterized in that one synchronizing character (S1, S2, S3, ...) is transmitted per burst (B1, B2, ...), said synchronizing character containing the information regarding waiting times ($W_1$, $W_2$, ... $W_4$).

0 166 892

1 / 2

FIG. 1

FIG. 2

FIG. 4

FIG. 3